# EUROPÄISCHE PATENTSCHRIFT

(11) **EP 0 449 165 B1**
(45) Veröffentlichungstag und Bekanntmachung des Hinweises auf die Patenterteilung: **07.09.1994**
(21) Anmeldenummer: 91104641.5
(22) Anmeldetag: 25.03.1991
(51) Int. Cl.: B60N 2/38

(54) **Sitzanordnung, insbesondere für ein Kraftfahrzeug**
Seat arrangement, in particular for motor vehicles
Aménagement de siège, en particulier pour véhicules automobiles

(30) Priorität: 24.03.1990 DE 9003464 U
(43) Veröffentlichungstag der Anmeldung: 02.10.1991
(73) Patentinhaber: Hagmeier, Georg, D-73340 Amstetten (DE)
(72) Erfinder: Hagmeier, Georg, D-73340 Amstetten (DE)
(74) Vertreter: Raible, Hans, Dipl.-Ing.

(56) Entgegenhaltungen:
- DE-A- 1 455 582
- DE-A- 2 307 917
- DE-A- 3 031 175
- DE-B- 1 254 036
- FR-A- 1 586 063
- US-A- 3 140 118
- US-A- 4 243 195

## Beschreibung

Die Erfindung betrifft eine Sitzanordnung, insbesondere für ein Kraftfahrzeug.

Aus der DE-A-3 715 128 kennt man eine Sitzanordnung für ein Kraftfahrzeug. Diese hat einen an einem Sitzgestell angeordneten Sitzträger, dessen Bewegung relativ zum Sitzgestell durch zwei Federbeine gedämpft ist. Diese Federbeine sind einerseits an einem hinteren Abschnitt des Sitzgestells, andererseits an einem vorderen Abschnitt des Sitzträgers, angelenkt und jeweils gegen die Kraft ihrer Feder einfederbar. Zwischen der Rückenlehne des Sitzträgers und einem Rückenteil des Sitzgestells erstreckt sich eine Schwinge, die an diesen beiden Teilen angelenkt ist. Zusätzlich ist eine Zugfeder mit einstellbarer Vorspannung zwischen dem Rückenteil des Sitzgestells und der Rückenlehne des Sitzträgers vorgesehen.

Die Aufgabe der Erfindung wird darin gesehen, eine derartige Sitzanordnung weiter zu verbessern.

Nach der Erfindung wird diese Aufgabe gelöst durch eine Sitzanordnung, insbesondere für ein Kraftfahrzeug, mit einem an einem Sitzgestell angeordneten Sitzträger und mit Mitteln zur Dämpfung der Bewegung dieses Sitzträgers relativ zum Sitzgestell, mit mindestens einem an einem hinteren Abschnitt des Sitzgestells und an einem vorderen Abschnitt des Sitzträgers angelenkten ersten einfederbaren Teil, welches gegen die Kraft einer Feder einfederbar ist, mit mindestens einem an einem vorderen Abschnitt des Sitzgestells und an einem hinteren Abschnitt des Sitzträgers angelenkten zweiten einfederbaren Teil, welches gegen die Kraft einer Feder einfederbar ist, und mit mindestens einer sich zwischen der Rückenlehne des Sitzträgers und einem Rückenteil des Sitzgestells erstreckenden Schwinge. Man erhält so eine Sitzanordnung, bei der der Fahrer sozusagen "schwimmend" sitzt, d.h. der Sitzträger kann in seiner eingefederten Arbeitsstellung Stöße der verschiedensten Richtungen absorbieren, wie das nachfolgend im einzelnen erläutert wird. Dabei wird in dieser "schwimmenden" Lage der Sitzträger zusätzlich durch die Abstützkraft des Benutzers stabilisiert, mit der dieser die Füße auf dem Boden abstützt, was ja eine entsprechende Rückwirkung auf den Sitzträger, die auf diesen wirkenden Kräfte, und damit dessen Stellung im Raum, hat. Von den Benutzern wird dieses Merkmal, das sozusagen eine Feineinstellung mit den Füßen gestattet, als sehr angenehm empfunden, wie überhaupt ein solcher Sitz ein sehr angenehmes Fahrgefühl bei ausgezeichneter Federung vermittelt.

In weiterer Ausgestaltung der Erfindung weist von dem mindestens einen ersten einfederbaren Teil und dem mindestens einen zweiten einfederbaren Teil mindestens eines ein Dämpfglied auf. Dabei ist in bevorzugter Weise ein solches Dämpfglied nach Art eines Federbeines ausgebildet.

Für die Anpassung an das Gewicht unterschiedlicher Fahrer, oder zur Einstellung der Art der Federung, ist der Anlenkpunkt mindestens einer Schwinge oder eines einfederbaren Teils verstellbar ausgebildet, wobei man in besonders bevorzugter Weise so vorgeht, daß die Anlenkpunkte des mindestens einen ersten einfederbaren Teils und des mindestens einen zweiten einfederbaren Teils am Sitzträger mittels einer Stellvorrichtung in gegensinniger Richtung verstellbar sind, also entweder zueinander hin oder voneinander weg.

Eine einfache Anordnung ergibt sich bei einer Sitzanordnung, bei welcher zwei erste einfederbare Teile vorgesehen sind, zwischen welchen das zweite einfederbare Teil angeordnet ist.

Als günstig hat sich ferner eine Sitzanordung erwiesen, bei welcher bei starkem Einfedern des Sitzträgers das mindestens eine erste einfederbare Teil und das mindestens eien zweite einfederbare Teil eine Neigung zur Horizontalen einnehmen, die jeweils in der Größenordnung von wenigen Grad liegt. Zwar bewirkt starkes Einfedern eine Erhöhung der im Anlenkpunkt nach oben wirksamen Gegenkraft, doch wird diese teilweise dadurch aufgehoben, daß der Anteil der nach oben wirkenden Komponente der Federkraft mit zunehmender Einfederung immer mehr zugunsten der horizontal wirkenden Komponente abnimmt, so daß insgesamt trotz der starken Einfederung die subjektiv empfundene Federcharakteristik sehr angenehm ist.

Weitere Einzelheiten und vorteilhafte Weiterbildungen der Erfindung ergeben sich aus dem im folgenden beschriebenen und in der Zeichnung dargestellten, in keiner Weise als Einschränkung der Erfindung zu verstehenden Ausführungsbeispiel, sowie aus den Unteransprüchen. Es zeigt:
- Fig. 1: eine raumbildliche Seitenansicht einer erfindungsgemäßen Sitzanordnung,
- Fig. 2: eine teilweise Darstellung, gesehen längs der Linie II-II der Fig. 1,
- Fig. 3: eine raumbildliche Darstellung der Sitzanordnung von vorne,
- Fig. 4: eine schematische Seitenansicht einer erfindungsgemäßen Sitzanordnung im unbelasteten Zustand und bei Einstellung für einen Fahrer mit niedrigem Gewicht,
- Fig. 5: eine Darstellung analog Fig. 4 bei mäßig belasteter Sitzanordnung,
- Fig. 6: eine Darstellung analog Fig. 4 und 5, bei der sich der Sitzträger in seiner eingefederten Arbeitsstellung befindet und im Augenblick hinten stärker eingefedert ist als vorne, und
- Fig. 7: eine Darstellung analog Fig. 6, bei welcher sich der Sitzträger in seiner eingefederten Arbeitsstellung befindet und im Augenblick vorne stärker eingefedert ist als hinten.

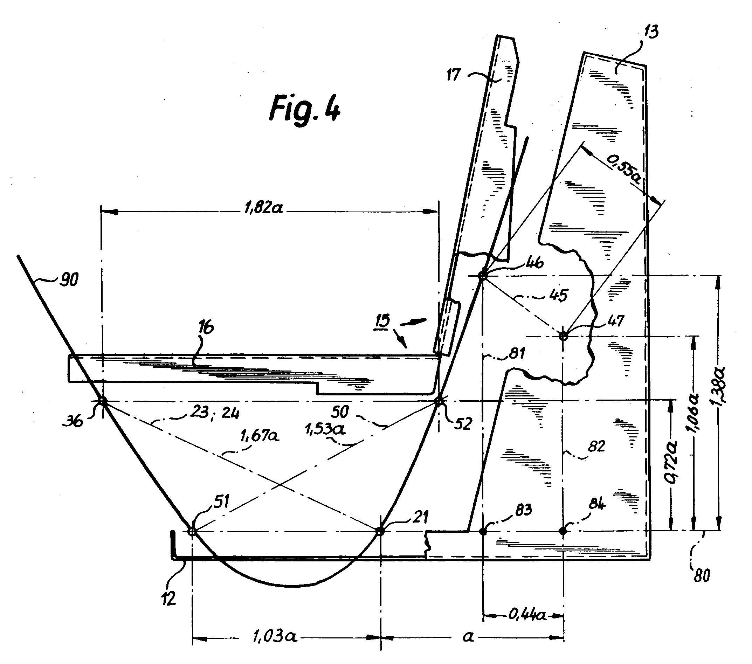

In der folgenden Beschreibung beziehen sich die Begriffe "vorne" und "hinten" auf die Fahrtrichtung; die Begriffe "rechts" und "links" beziehen sich auf den Fahrer, der auf der Sitzanordnung sitzt und in Fahrtrichtung schaut. Die beschriebene Sitzanordnung ist zu ihrer Längsachse (parallel zur Fahrtrichtung) symmetrisch aufgebaut, wo nicht anders angegeben. Es wird jeweils angenommen, daß sich die Sitzanordnung in einer horizontalen Lage befindet, d.h. daß z.B. das Fahrzeug, auf dem sie montiert ist, sich auf einer horizontalen Ebene befindet. Die Abstände beziehen sich, sofern nicht anders angegeben, auf die seitlichen Projektionen, wie sie z.B. in den Fig. 4 bis 7 dargestellt sind. Dies gilt insbesondere auch für die Ansprüche.

Die vorliegende Erfindung kann in Zusammenwirken mit einem senkrechtstehenden, mit der Sitzanordnung gegenphasig gekoppelten Pendel verwendet werden, wie das die DE-A- 37 15 128 zeigt. Die Erfindung kann ebenso in Verbindung mit einer Anpassung an die Hanglage verwendet werden, wie sie die DE-A 37 15 128 zeigt. Auf den Inhalt dieser Offenlegungsschrift wird deshalb zur Vermeidung von Längen ausdrücklich Bezug genommen.

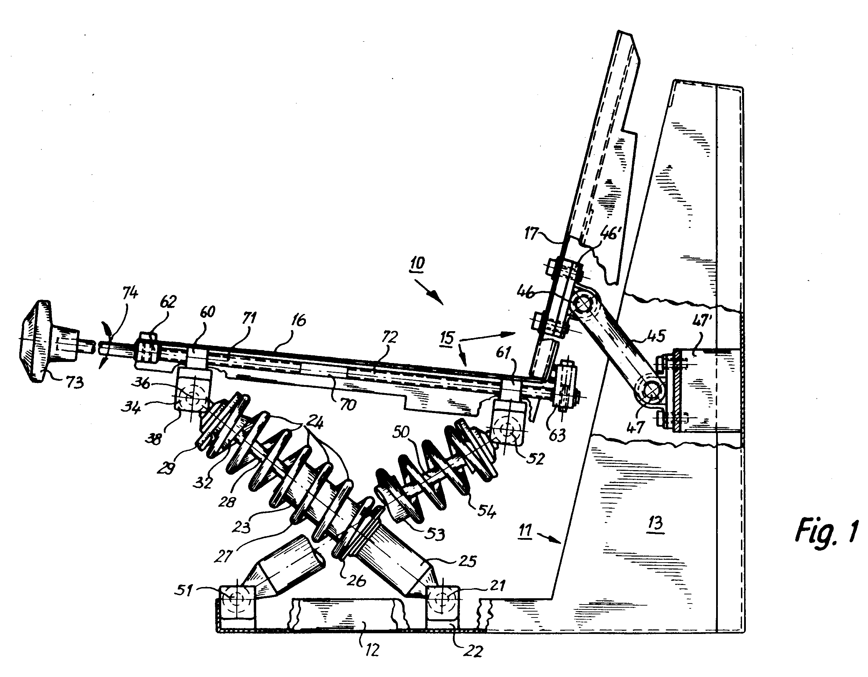

Fig. 1 zeigt in Seitenansicht ein bevorzugtes Ausführungsbeispiel einer erfindungsgemäßen Sitzanordnung 10. Diese hat ein Sitzgestell 11 mit einem Bodenteil 12, das z.B. auf einem Traktor befestigt werden kann, und mit einem Rückenteil 13. Ferner hat sie einen Sitzträger 15 mit einem Sitzteil bzw. Sitzfläche 16 und einer Rückenlehne 17. Auf dem Sitzträger 15 wird der eigentliche Fahrersitz befestigt, der in diesem Fall nicht dargestellt ist. Der eigentliche Sitz kann aus Kunststoff geschäumt und mit Stoff überzogen sein, vgl. z.B. das Teil 40 in der DE-A 37 15 128, sowie dessen Befestigung.

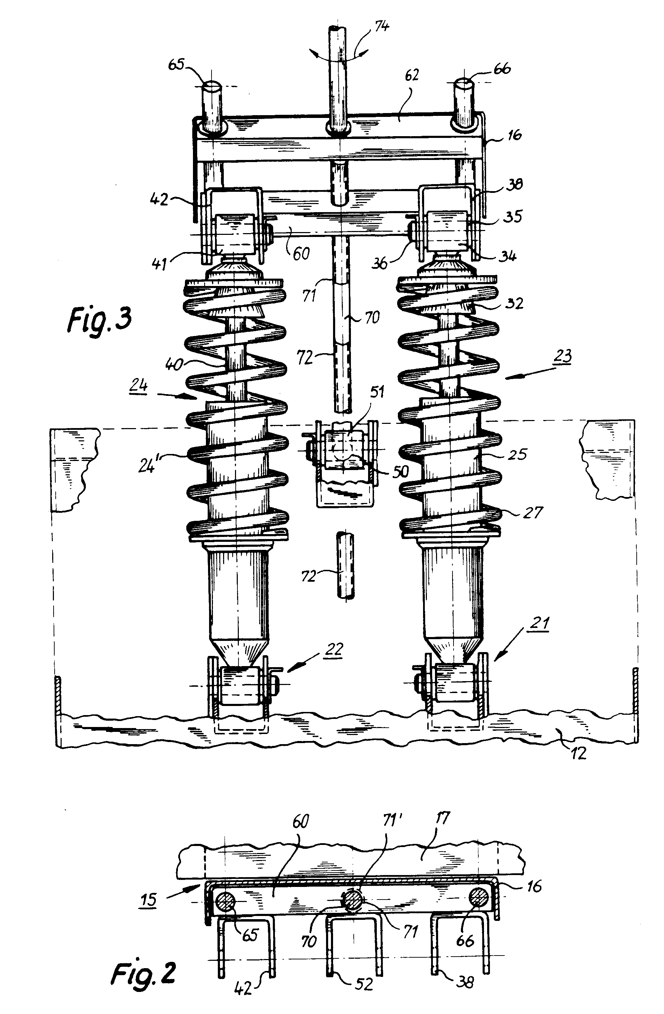

Am hinteren Abschnitt des Bodenteils 12 sind mittels zweier Gelenke 21, 22 zwei Federbeine 23, 24 angelenkt, welche als erste einfederbare Teile dienen. In Fig. 1 ist nur das vordere Federbein erkennbar. Die hier bevorzugt verwendeten Federbeine enthalten jeweils einen Stoßdämpfer, dessen Zylinder für das Federbein 23, beispielhaft mit 25 bezeichnet ist und auf dem eine Scheibe 26 als Widerlager für eine Feder 27 befestigt ist. Ferner hat das Federbein 23 eine Kolbenstange 28, auf welcher eine Scheibe 29 als zweites Widerlager für die Feder 27 befestigt ist. Zwischen der Scheibe 29 und dem Zylinder 25 befindet sich auf der Kolbenstange 28 ein Gummiring 32, der als Gummipuffer für den Fall dient, daß das Federbein durch starke Belastung vollständig einfedert. Am Ende der Kolbenstange befindet sich wie üblich eine Hülse 34, in der sich eine Gummibuchse 35 befindet. Die Längsachse der Hülse 34 verläuft senkrecht zur Längsachse der Kolbenstange 28. Mittels eines die Buchse 35 durchdringenden Bolzens 36 ist die Hülse 34 an einem Scharnierteil 38 befestigt, das auch in Fig. 2 dargestellt ist. (In Fig. 2 sind die Federbeine nicht dargestellt).

Das andere Federbein 24 ist identisch aufgebaut und mittels einer an seiner Kolbenstange 40 befestigten Hülse 41 in identischer Weise an einem Scharnierteil 42 gelagert, vgl. Fig. 3. Bei einem ausgeführten Muster wurden z.B. Federbeine 23, 24 verwendet, bei deren Einfederung die Kraft der Feder jeweils um 1,5 kg/mm zunahm, und zwar ausgehend von 25 kg im ausgefahrenen Zustand des Federbeins. Es handelte sich um Federbeine der SEBAC Spa, Italien, Typ Nr. 10.3216.00.6641 Für das Federbein 50 (siehe nachfolgend) wurde derselbe Typ verwendet, aber mit einer schwächeren Feder. Während der Durchmesser des Federdrahts bei den Federbeinen 23, 24 sechs mm betrug, betrug er beim Federbein 50 nur 5 mm. Dadurch ist sowohl die Anfangskraft wie die Federkonstante kleiner. Natürlich können diese Werte in ganz weiten Grenzen variiert werden und werden hier nur als bevorzugte Beispiele angegeben. Selbstverständlich können bei der Erfindung verschiedene Bauarten von Federbeinen verwendet werden, wie sie z.B. aus der Kraftfahrzeugtechnik oder zum Abstützen von Sitzen geläufig sind.

Die Anlenkung an den Gelenken 21 und 22 erfolgt in gleicher Weise, wie sie für das Scharnierteil 38 ausführlich beschrieben wurde, wobei natürlich auch beliebige andere Arten von Anlenkungen möglich sind.

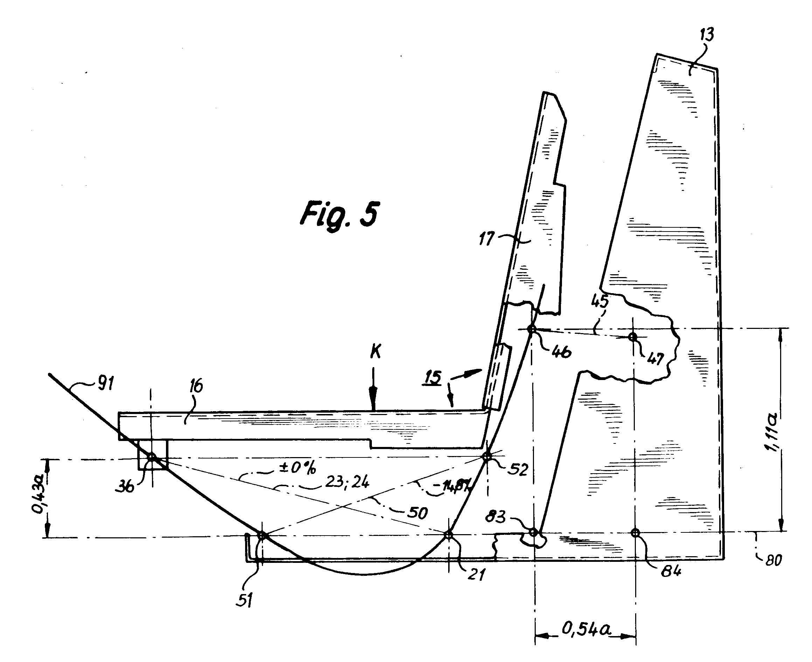

Wie Fig. 1 zeigt, ist die Rückenlehne 17 über zwei starre Schwingen 45, von denen in Fig. 1 nur die linke sichtbar ist, mit dem Rückenteil 13 des Sitzgestells 11 verbunden. Die Schwingen 45 sind jeweils an einer Stelle 46 an der Rückenlehne 17 und an einer Stelle 47 am Rückenteil 13 angelenkt. Fig. 1 zeigt bildlich eine bevorzugte Art der Lagerung an Lagerböcken 46' bzw. 47'. Wiez.B. aus Fig. 4 hervorgeht, liegt die Anlenkstelle 46 unterhalb der Mitte der Rückenlehne 17, also in deren unteren Hälfte, und im unbelasteten Zustand liegt die Anlenkstelle 47 tiefer als die Anlenkstelle 46. Beispielhafte, bevorzugte Maßverhältnisse werden im folgenden anhand der Fig. 4 bis 7 erläutert und sind auch in den Ansprüchen angegeben. Wie Fig. 5 zeigt, verlaufen die Schwingen 45 etwa waagerecht, wenn der Sitzträger 15 teilweise eingefedert ist. Die Schwingen 45 verhindern in diesem Fall Vor- und Rückwärtsbewegungen des Sitzträgers 15 in oder gegen die Fahrtrichtung.

Wie die Fig. 1 und 3 zeigen, ist ferner ein zweites einfederbares Teil 50 vorgesehen, welches kreuzweise zu den beiden ersten einfederbaren Teilen 23 und 24 verläuft. Es ist am Boden 12 an einer vorderen Stelle 51 angelenkt und am Sitzteil 16 an einer hinteren Stelle 52. Auch das zweite einfederbare Teil 50 ist als Federbein ausgeführt, d.h. es weist (wie die beiden ersten einfederbaren Teile 23 und 24) einen Stoßdämpfer 53 und eine vorgespannte Feder 54 auf. Dabei ist aber darauf hinzuweisen, daß, wie bereits erläutert, die Feder 54 bevorzugt aus dünnerem Material besteht als die Federn 24' und 27, so daß bei gleicher Belastung die Feder 54 schneller und stärker nachgibt als die Feder 27 kombiniert mit der Feder 24'. Man kann grob sagen, daß sich bei Belastung die Kräfte der kombinierten Federbeine 23 und 24 zur Kraft des Federbeins 50 bevorzugt etwa wie 3:1 oder 4:1 verhalten, wobei die Kräfte jeweils in der Längsrichtung des betreffenden Federbeins gemessen sind.

Die oberen Anlenkpunkte, also die Scharniere 38 und 42 einerseits und das Scharnier 52 andererseits sind gegensinnig zueinander verstellbar, vgl. die Fig. 1 bis 3. Hierzu sind die Scharniere 38 und 42 gemäß Fig. 2 an einem verschiebbaren Teil 60 angeordnet, und das Scharnier 52 ist an einem verschiebbaren Teil 61 (Fig. 1) angeordnet, das im übrigen mit dem Teil 60 hinsichtlich seiner Form übereinstimmt.

Am Sitzteil 16 des Sitzträgers 15 ist vorne und hinten je ein Führungsglied 62 bzw. 63 befestigt und in diesen Führungsgliedern ist, wie aus Fig. 3 klar hervorgeht, links und rechts je eine Führungsstange 65 bzw. 66 starr befestigt, welche beide zur Längsführung der verschiebbaren Teile 60, 61 dienen.

Ferner ist in der Mitte der Führungsglieder 62, 63 eine Verstellspindel 70 so gelagert, daß sie drehbar, aber nicht längsverschiebbar ist. An ihrem vorderen, also dem in Fig. 1 linken Teil hat die Spindel 70 ein Linksgewinde 71, und an ihrem hinteren, also in Fig. 1 rechten Teil hat sie ein Rechtsgewinde 72. Demzufolge hat das verschiebbare Teil 60 ein Innen-Linksgewinde 71' für die Aufnahme des Gewindeabschnitts 71 der Spindel 70, und umgekehrt hat das verschiebbare Teil 61 ein Innen-Rechtsgewinde (nicht dargestellt) für die Aufnahme des Gewindeabschnitts 72 der Spindel 70.

Durch Drehen der Spindel 70 mittels des Handgriffs 73 und gemäß dem Pfeil 74 der Fig. 1 können die verschiebbaren Teile 60, 61 entweder näher zueinander bewegt werden, wie das für einen schweren Fahrer notwendig ist, oder sie können weiter voneinander wegbewegt werden, wie das für einen Fahrer mit niedrigem Körpergewicht erforderlich ist. Außerdem ist eine Einstellung auf die bevorzugte Art der Fahrbahn möglich, also z.B. auf die Fahrt auf einer Landstraße oder die Fahrt auf einem Acker.

Bei einem Ausführungsbeispiel konnte z.B. der Abstand der Anlenkpunkte 36, 52 (bezogen auf und gemessen in der Seitenansicht gemäß Fig. 1) zwischen 222 mm und 265 mm verstellt werden. Die Fig. 4 bis 7 zeigen den maximalen Abstand dieser Anlenkpunkte, also eine Einstellung für einen leichten Fahrer. Bezeichnet man diesen Abstand gemäß Fig. 4 bis 7 als b, so kann er also bis auf 0,84 b reduziert werden, um den Sitz an einen schweren Fahrer anzupassen.

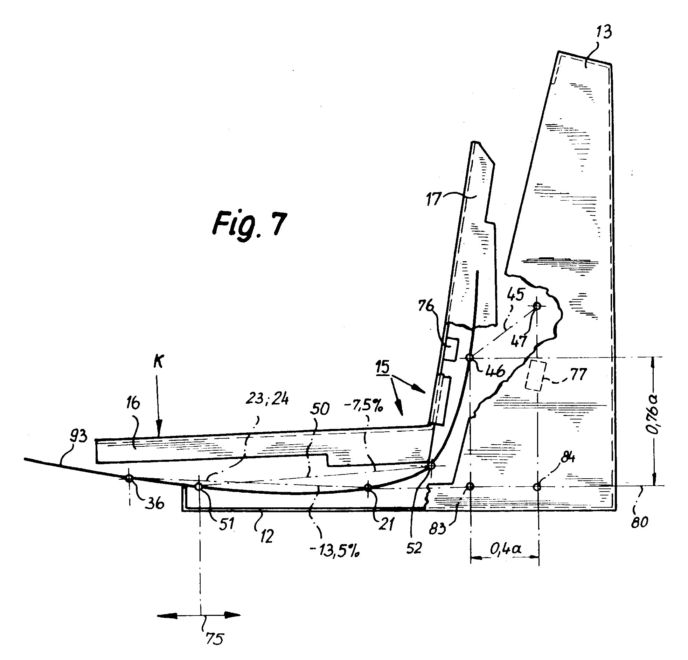

Bevorzugt wird auch die Anlenkstelle 51 in Längsrichtung verstellbar gemacht, wie das in Fig. 7 durch den Pfeil 75 angedeutet ist. Hier genügt ein sehr kleiner Verstellweg von z.B. 5 mm, wobei auch hier die Sitzanordnung für einen schweren Fahrer eingestellt wird, wenn die Anlenkpunkte 21 und 51 näher zusammengebracht werden. Die Verstellung des Anlenkpunktes 51 ist in der Zeichnung nicht dargestellt. Z.B. kann bei einer Sitzanordnung mit den vorstehend angegebenen Maßen (222 bis 265 mm) der Abstand der Anlenkpunkte 51 und 21 zwischen 133 und 138 mm verstellbar sein, wobei der Abstand 133 mm einem Fahrer von 125 kg und der Abstand 138 mm einem Fahrer von 45 kg Körpergewicht entsprechen würde.

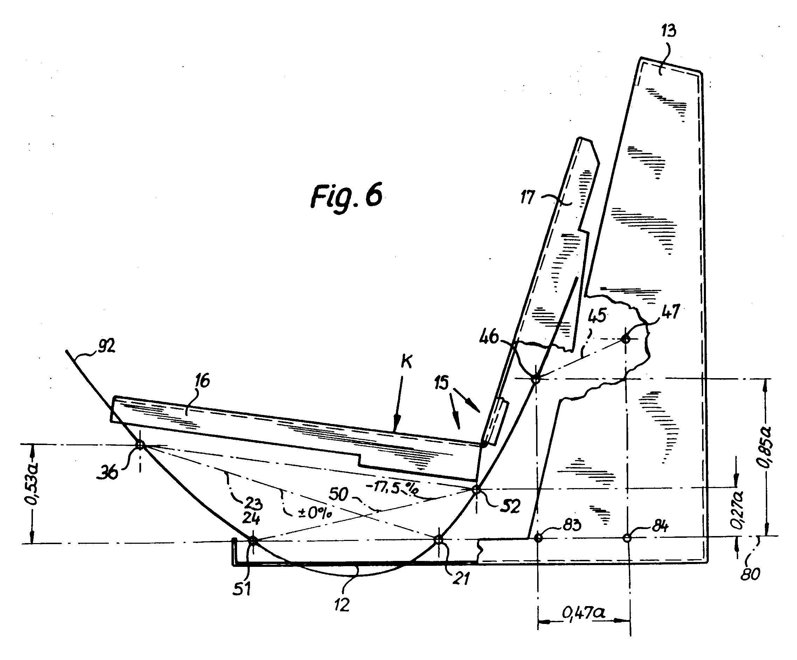

Fig. 7 zeigt auch einen an der Rückenlehne 17 vorgesehenen Puffer 76 und dessen am Rückenteil 13 befestigtes Gegenstück 77. Diese Teile sind für den Fall vorgesehen, daß gemäß Fig. 6 die Rückenlehne 17 im eingefederten Zustand stark nach hinten schwingt.

Fig. 4 zeigt bevorzugte Maßverhältnisse. Durch die Anlenkpunkte 51 und 21 wird, eine waagerechte Ebene 80 gezogen, und auf diese werden von den Anlenkpunkten 46 und 47 der zweiten Schwinge 55 die Lote 81 bzw. 82 gezogen. Die Fußpunkte werden mit 83 bzw. 84 bezeichnet. Der Abstand vom Anlenkpunkt 21 zum Fußpunkt 84 ist unveränderlich und wird deshalb mit a bezeichnet. Der Abstand zwischen den Fußpunkten 83 und 84 beträgt dann bei Fig. 4, wo der Sitzträger 15 nicht belastet ist, 0,44 a. Der Abstand von der Ebene 80 zum Anlenkpunkt 47 beträgt 1,06 a und ist unveränderlich. Die Länge der zweiten Schwinge 45 beträgt 0,55 a und ist unveränderlich. Der Abstand vom Anlenkpunkt 46 zur Ebene 80 beträgt bei Fig. 4 1,38 a.

Der Abstand der Anlenkpunkte 51 und 21 beträgt hier 1,03a und ist, wie erläutert, nur wenig veränderlich. Der Abstand der Anlenkpunkte 36 und 52 beträgt bei Fig. 4 1,82 a entsprechend etwa 265 mm. Er kann, wie erläutert, verringert werden, wobei dann der Sitzträger 15 weiter nach oben verschoben wird. Die Länge eines ersten einfederbaren Teils 23 im unbelasteten Zustand beträgt 1,67 a, und die des zweiten einfederbaren Teils 50 im unbelasteten Zustand 1,53 a, jeweils bezogen auf dieses Ausführungsbeispiel. Naturgemäß sind diese Zahlenangaben nicht limitativ, sondern sollen nur diese schwierige Erfindung an einem bevorzugten Ausführungsbeispiel besser verständlich machen.

Wird gemäß Fig. 5 das Sitzteil 16 durch eine Kraft K belastet, die etwa im hinteren Drittel des Sitzteils 16 angreift, so verschiebt sich letzteres parallel nach unten, und der Abstand vom Anlenkpunkt 46 zur Ebene 80 nimmt auf 1,11 a ab, wobei a wie in Fig. 4 definiert ist. Der Abstand der Fußpunkte 83 und 84 nimmt auf 0,54 a zu, d.h. der Sitzträger 15 wird etwas in Richtung nach vorne verschoben. Die Länge der ersten einfederbaren Teile 23, 24 nimmt nicht ab, d.h. diese federn zunächst kaum oder gar nicht ein, während die Länge des zweiten einfederbaren Teils 50 um 14,8 % abnimmt. Der Punkt 36 bewegt sich also zunächst auf einem im wesentlichen konstanten Radius um den Anlenkpunkt 21.

Diese Art der Einstellung eignet sich gut zur Fahrt auf Straßen und wird dort als sehr angenehm empfunden, d.h. für Straßenfahrten kann man den Abstand der Anlenkpunkte 36 und 52 so einstellen, daß der Sitz bei Belastung etwa in diese Lage einfedert, wobei natürlich bei Stößen etc. die Einfederung stärker wird.

Bei Fahrten auf Äckern, Wiesen etc. wird jedoch eine stärkere Einfederung bevorzugt, wie sie die Fig. 6 und 7 zeigen, wobei die Schwinge 45 (und ihr spiegelbildliches, nicht dargestelltes Gegenstück auf der rechten Seite der Sitzanordnung 10) vom Anlenkpunkt 47 nach unten zum Anlenkpunkt 46 verläuft, wo daß der Sitzträger auch Bewegungen in Fahrtrichtung oder entgegen der Fahrtrichtung ausführen kann, wie das aus den Fig. 6 und 7 hervorgeht.

Bei Fig. 6 wirkt die Kraft K im hinteren Drittel der Sitzfläche 16, wodurch der Anlenkpunkt 46 stark nach unten wandert. Sein Abstand von der Ebene 80 beträgt hier nur noch 0,85 a, also nur noch ca. 62 % des Abstands im unbelasteten Zustand, wie ihn Fig. 4 zeigt. Der Abstand der Fußpunkte 83 und 84 beträgt hier noch 0,44 a, d.h. der Sitzträger 15 hat sich gegenüber Fig. 5 etwas nach hinten bewegt. Die ersten einfederbaren Teile 23, 24 sind immer noch gar nicht oder nur ganz wenig eingefedert, und das zweite einfederbare Teil 50 ist um 17,5 % eingefedert. (- 17,5 % in Fig. 6 bedeutet z.B., daß das Federbein 50 gegenüber dem in Fig. 4 dargestellten, unbelasteten Zustand um 17,5 % kürzer geworden ist.)

Bei Fig. 7 wirkt die Kraft K auf das vordere Drittel der Sitzfläche 16, so daß diese vor allem in ihrem vorderen Bereich nach unten geht, wobei die hohe Federkonstante der kombinierten Federbeine 23 und 24 zu überwinden ist. Auch hat der Fahrer die Größe dieser vorderen Einfederung dadurch im Griff, daß er ja mit den Füßen am Boden abgestützt ist und somit dieser Einfederung nach Belieben entgegenwirken kann bzw. automatisch entgegenwirkt.

Der Abstand des Anlenkpunkts 46 von der Ebene 80 beträgt hier 0,76 a, ist also kleiner als der Abstand des Anlenkpunktes 47 von der Ebene 80. Der Abstand der Fußpunkte 83 und 84 beträgt hier 0,4 a.

Bei dieser Art der Belastung sind die ersten einfederbaren Teile 23 und 24 sehr stark eingefedert, nämlich um 13.5 %, und das zweite einfederbare Teil 50 ist um 7,5 % eingefedert, also im Vergleich zu Fig. 6 wieder länger geworden (als Folge der Verkürzung der ersten einfederbaren Teile 23 und 24).

Wie ein Vergleich der Fig. 6 und 7 zeigt, hat die Sitzanordnung bei dieser Einstellung, bei der der Abstand des Anlenkpunkts 46 von der Ebene 80 kleiner ist als der Abstand des Anlenkpunkts 47 von der Ebene 80, die Möglichkeit, auch horizontale Ausgleichsbewegungen auszuführen, zusätzlich zu den vertikalen Ausgleichsbewegungen.

Dabei können sich horizontale und vertikale Ausgleichsbewegungen überlagern, d.h. die Sitzanordnung hat den Charakter einer "schwimmenden" Sitzanordnung und ist optimal an die Bedürfnisse eines Fahrers angepaßt, der z.B. mit einem Traktor auf Äckern oder Wiesen fährt, so daß die Wirbelsäule stark von Stößen entlastet wird. Diese Art der Einstellung, wie sie die Fig. 6 und 7 zeigen, ist also optimal für die Bedürfnisse der Land- und Forstwirtschaft. In gleicher Weise eignet sie sich für geländegängige Fahrzeuge, wobei durch die beschriebene Verstellung eine Anpassung sowohl an Straßenfahrt (Einstellung gemäß Fig. 5) wie an Geländefahrt (Einstellung nach Fig. 6 und 7) möglich ist. Die Einstellung erfolgt, wie bereits beschrieben, mittels der Spindel 70 durch gegenläufige Verstellung der beweglichen Teile 60 und 61 mittels des Drehknopfs 73.

Bei der Einstellung nach den Fig. 6 und 7 bilden die ersten einfederbaren Teile 23, 24 und das zweite einfederbare Teil 50 nur noch kleine Winkel mit der horizontalen Ebene 80. Z.B. schließt in Fig. 6 das Federbein 50 mit der Ebene 80 einen Winkel von 13° ein, und das Federbein 23 einen Winkel von 18°. Bei Fig. 7 schließt das Federbein 23 mit der Ebene 80 einen Winkel von 2° ein, und das Federbein 50 einen Winkel von 5°. Diese Federbeine verlaufen also hier unter Winkeln im Bereich von wenigen Graden zur Horizontalen, daß ihre Kraftkomponenten in vertikaler Richtung nur noch klein sind. Bei Belastung im vorderen Drittel der Sitzfläche (Fig. 7) werden die Federbeine 23 und 24 zunehmend stärker verkürzt und bewirken dadurch eine Verstärkung der im Anlenkpunkt 36 nach oben wirkenden Gegenkraft. Bei Belastung im hinteren Drittel der Sitzfläche (Fig. 6) wird das zweite einfederbare Teil 50 weiter verkürzt und bewirkt dort eine Erhöhung der im Anlenkpunkt 52 nach oben wirkenden Gegenkraft. In beiden Fällen wird aber diese Erhöhung der vertikal wirkenden Gegenkraft teilweise dadurch aufgehoben, daß der Anteil der nach oben wirkenden Komponente der Federkraft mit zunehmender Einfederung immer mehr zugunsten der horizontal wirkenden Komponente abnimmt, so daß insgesamt trotz der starken Einfederung die subjektiv empfundene Federcharakteristik sehr angenehm ist.

Aus Sicherheitsgründen wird der Raum zwischen der Sitzfläche 16 und dem Bodenteil 12 außen durch eine (nicht dargestellte) elastische Abdeckung abgedeckt, damit sich niemand an den Federbeinen einklemmen kann.

In Fig. 4 ist eine Ortskurve 90 dargestellt, welche durch die Anlenkpunkte 36, 51, 21, 52 und 46 geht, und etwa die Form einer Parabel hat.

In Fig. 5 ist eine Ortskurve 91 dargestellt, welche durch dieselben Punkte geht, aber hier eine andere Form hat.

Fig. 6 zeigt eine Ortskurve 92, welche ebenfalls durch die genannten Punkte geht und wieder etwa parabelförmig aussieht.

Und schließlich zeigt Fig. 7 eine Ortskurve 93, welche wiederum durch die genannten Punkte geht.

Man kann davon ausgehen, daß durch die Verstellung der Anlenkpunkte 36 und 52 mittels des Drehknopfs 73 eine bestimmte Ortskurve eingestellt wird, und zwar bezogen auf einen Fahrer bestimmten Gewichts. So würde z.B. die Ortskurve 91 nach Fig. 5 (bei Belastung durch das Fahrergewicht K) eine solche Ortskurve darstellen.

Nun hat der Erfinder festgestellt, daß es derartige "Belastungsortskurven" gibt, also z.B. die Ortskurve 91 nach Fig. 5, die im wesentlichen nur eine vertikale Einfederung des Sitzträgers ermöglichen, weil sie sich "ungern verformen", dagegen andere wie die Ortskurve 92 nach Fig. 6, die im Vergleich zu Fig. 5 eine Belastung durch einen schwereren Fahrer darstellt und die sich ohne Schwierigkeiten "verformen" läßt und daher die erwähnte schwimmende Lagerung oder Federung ermöglicht. Die Ermittlung der genauen Form dieser Ortskurven harrt der theoretischen Durchdringung, doch sollte hierauf hingewiesen werden.

Auf jeden Fall ist es so, daß man durch Verstellung mittels des Handrades 73 zwei Dinge verstellt:
a) Die Gewichtseinstellung (Anpassung an das Gewicht des Fahrers)
b) Den Typ der Einfederung.

Für denselben Fahrer kann man also durch Verstellung mittels des Handrades 73 entweder einen Typ der Einfederung einstellen, der mehr an Straßenfahrt angepaßt ist und keine Nickbewegungen ermöglicht, oder einen Typ der Einfederung, der an die Fahrt auf dem Acker angepaßt ist und Nickbewegungen ermöglicht, also die erwähnte schwimmende Einfederung. Dies geschieht durch Auswahl der betreffenden Ortskurve, z.B. 91 oder 92, unter Berücksichtigung des Fahrergewichts. Z.B. könnte sich für einen leichten Fahrer bei einer bestimmten Einstellung die Ortskurve 91 ergeben, für einen schweren Fahrer dagegen die Ortskurve 92, d.h. für diese verschieden schweren Fahrer hätte der Sitz - bei identischer Einstellung - völlig verschiedene Federeigenschaften.

Das beschriebene Ausführungsbeispiel wurde hinsichtlich seiner Abmessungen einem derzeit als optimal erkannten Modell der Erfindung entnommen, so daß bestimmten Maßverhältnissen im Rahmen der nachstehenden Ansprüche erfinderische Bedeutung zukommen kann.

## Patentansprüche

1. Sitzanordnung, insbesondere für ein Kraftfahrzeug,
mit einem an einem Sitzgestell (11) angeordneten Sitzträger (15) und mit Mitteln (25, 53) zur Dämpfung der Bewegung dieses Sitzträgers (15) relativ zum Sitzgestell (13),
mit mindestens einem an einem hinteren Abschnitt des Sitzgestells (11) und an einem vorderen Abschnitt des Sitzträgers (15) angelenkten ersten einfederbaren Teil (23, 24), welches gegen die Kraft einer Feder (24', 27) einfederbar ist,
mit mindestens einem an einem vorderen Abschnitt des Sitzgestells (11) und an einem hinteren Abschnitt des Sitzträgers (15) angelenkten zweiten einfederbaren Teil (50), welches gegen die Kraft einer Feder (54) einfederbar ist,
und mit mindestens einer sich zwischen der Rückenlehne (17) des Sitzträgers (15) und einem Rückenteil (13) des Sitzgestells (11) erstreckenden Schwinge (45).

2. Sitzanordnung nach Anspruch 1, bei welcher die starr ausgebildete Schwinge (45) durch Belastung der Sitzanordnung (10) in eine horizontale Lage bringbar ist.

3. Sitzanordnung nach Anspruch 1 oder 2, bei welcher von dem mindestens einen ersten einfederbaren Teil (23, 24) und dem mindestens einen zweiten einfederbaren Teil (50) mindestens eines ein Dämpfglied (25, 53) aufweist.

4. Sitzanordnung nach Anspruch 3, bei welcher das Dämpfglied nach Art eines Federbeins (25, 53) ausgebildet ist.

5. Sitzanordnung nach einem oder mehreren der vorhergehenden Ansprüche, bei welcher der Anlenkpunkt (36, 52, 51) mindestens einer Schwinge oder eines einfederbaren Teils (23, 24, 50) verstellbar ausgebildet ist.

6. Sitzanordnung nach Anspruch 5, bei welcher die Anlenkpunkte (36, 42, 52) des mindestens einen ersten einfederbaren Teils (23, 24) und des mindestens einen zweiten einfederbaren Teils (50) am Sitzträger (15) mittels einer Stellvorrichtung (60, 61, 70, 71, 72) in gegensinniger Richtung verstellbar sind, also entweder zueinander hin oder voneinander weg.

7. Sitzanordnung nach einem oder mehreren der vorhergehenden Ansprüche, bei welcher zwei erste einfederbare Teile (23, 24) vorgesehen sind, zwischen welchen das zweite einfederbare Teil (50) angeordnet ist (Fig. 3).

8. Sitzanordnung nach einem oder mehreren der vorhergehenden Ansprüche, bei welcher das mindestens eine erste einfederbare Teil (23, 24) eine größere Federkonstante aufweist als das mindestens eine zweite einfederbare Teil (50), so daß beim Einfedern infolge Belastung zunächst im wesentlichen nur das mindestens eine zweite einfederbare Teil (50) und erst dann bei weiterem Einfedern des Sitzträgers (15) auch das mindestens eine erste einfederbare Teil (23, 24) verkürzt wird.

9. Sitzanordnung nach einem oder mehreren der vorhergehenden Ansprüche, bei welcher bei starkem Einfedern des Sitzträgers (15) das mindestens eine erste einfederbare Teil (23, 24) und das mindestens eine zweite einfederbare Teil (50) eine Neigung zur Horizontalen (80) einnehmen, die jeweils in der Größenordnung von wenigen Grad liegt (Fig. 6, 7).

10. Sitzanordnung nach mindestens einem der vorhergehenden Ansprüche, bei welcher die Schwinge (45) in der Weise (46 bzw. 47) zwischen Sitzträger (15) und Sitzgestell (11) angeordnet ist, daß ihre Anlenkpunkte an Sitzträger (15) und Sitzgestell (11) erst nach einer gewissen Einfederung des Sitzträgers (15) in einer horizontalen Ebene liegen.

11. Sitzanordnung nach Anspruch 10, bei welcher die Schwinge (45) an der Rückenlehne (17) des Sitzträgers (15) und an deren unteren Hälfte angelenkt (46) ist.

12. Sitzanordnung nach einem oder mehreren der vorhergehenden Ansprüche, bei welcher zwischen der Rückenlehne (17) des Sitzträgers (15) und dem ihr gegenüberliegenden Abschnitt (13) des Sitzgestells (11) eine Pufferanordnung (76, 77) vorgesehen ist, welche insbesondere bei starker Einfederung wirksam ist.

13. Sitzanordnung nach einem oder mehreren der vorhergehenden Ansprüche, bei welcher der Abstand zwischen den Anlenkpunkten (21, 51) der ersten und zweiten einfederbaren Teile (23, 24, 50) am Bodenteil (12) kleiner ist als der Abstand der Anlenkpunkte (36, 52) dieser einfederbaren Teile am Sitzteil (16) des Sitzträgers (15).

14. Sitzanordnung nach Anspruch 13, bei welcher das Verhältnis dieser Abstände (51-21 zu 36-52) im Bereich 0,6 bis 0,45 liegt.

15. Sitzanordnung nach einem oder mehreren der vorhergehenden Ansprüche, bei welcher ein Anlenkpunkt (47) einer Schwinge (45) am Sitzgestell (11) von dem Anlenkpunkt (21) eines ersten einfederbaren Teils (23, 24) am Bodenteil (16) des Sitzgestells (11) in horizontaler Richtung einen Abstand aufweist, der etwa in der Größenordnung des Abstands zwischen Sitzteil (16) des Sitzträgers (15) und Bodenteil (12) des Sitzgestells (11) liegt, wenn der Sitz nicht belastet ist.

16. Sitzanordnung nach einem oder mehreren der vorhergehenden Ansprüche, bei welcher ein Anlenkpunkt (47) einer Schwinge (45) am Sitzgestell (11) von dem Anlenkpunkt (21) eines ersten einfederbaren Teils (23, 24) am Bodenteil (16) des Sitzgestells (11) in vertikaler Richtung einen Abstand aufweist, der etwa in der Größenordnung des Abstands zwischen Sitzteil (16) des Sitzträgers (15) und Bodenteil (12) des Sitzgestells (11) liegt, wenn der Sitz nicht belastet ist.

17. Sitzanordnung nach einem oder mehreren der vorhergehenden Ansprüche, bei welcher die Länge der Schwinge (45) zwischen ihren Anlenkpunkten (46, 47) in der Größenordnung etwa dem halben Abstand zwischen Sitzteil (16) des Sitzträgers (15) und Bodenteil (12) des Sitzgestells (11) entspricht, wenn der Sitz nicht belastet ist.

## Claims

1. Seat arrangement, in particular for a motor vehicle, with a seat carrier (15) disposed on a seat supporting structure (11) and with means (25, 53) for damping the movement of this seat carrier (15) relative to the seat supporting structure (13), with at least one first resiliently compressible part (23, 24) which is articulated on a rear portion of the seat supporting structure (11) and on a front portion of the seat carrier (15) and is resiliently compressible against the force of a spring (24', 27), with at least one second resiliently compressible part (50) which is articulated on a front portion of the seat supporting structure (11) and on a rear portion of the seat carrier (15) and is resiliently compressible against the force of a spring (54), and with at least one link (45) extending between the backrest (17) of the seat carrier (15) and a back part (13) of the seat supporting structure (11).

2. Seat arrangement according to claim 1, in which the rigid link (45) can be brought into a horizontal position by loading the seat arrangement (10).

3. Seat arrangement according to claim 1 or 2, in which at least one of the at least one first resiliently compressible part (23, 24) and the at least one second resiliently compressible part (50) comprises a damping member (25, 53).

4. Seat arrangement according to claim 3, in which the damping member is embodied in the manner of a spring strut (25, 53).

5. Seat arrangement according to one or more of the preceding claims, in which the articulation point (35, 52, 51) of at least one link or one resiliently compressible part (23, 24, 50) is embodied so as to be adjustable.

6. Seat arrangement according to claim 5, in which the articulation points (36, 42, 52) of the at least one first resiliently compressible part (23, 24) and of the at least one second resiliently compressible part (50) on the seat carrier (15) are adjustable by means of an adjusting device (60, 61, 70, 71, 72) in opposite directions, i.e. either towards or away from one another.

7. Seat arrangement according to one or more of the preceding claims, in which two first resiliently compressible parts (23, 24) are provided, between which the second resiliently compressible part (50) is disposed (fig. 3).

8. Seat arrangement according to one or more of the preceding claims, in which the at least one first resiliently compressible part (23, 24) exhibits a greater spring constant than the at least one second resiliently compressible part (50) so that when compressed resiliently as a result of loading, initially essentially only the at least one second resiliently compressible part (50) is shortened and only then after further resilient depression of the seat carrier (15) also the at least one first resiliently compressible part (23, 24) is shortened.

9. Seat arrangement according to one or more of the preceding claims, in which with severe resilient depression of the seat carrier (15) the at least one first resiliently compressible part (23, 24) and the at least one second resiliently compressible part (50) adopt an angle in relation to the horizontal (80) which in each case lies in the region of a few degrees (figs. 6, 7).

10. Seat arrangement according to at least one of the preceding claims, in which the link (45) is disposed between the seat carrier (15) and the seat supporting structure (11) in such a way (46 or 47) that their articulation points on the seat carrier (15) and the seat supporting structure (11) only lie in a horizontal plane after a certain resilient depression of the seat carrier (15).

11. Seat arrangement according to claim 10, in which the link (45) is articulated on the backrest (17) of the seat carrier (15) and on the lower half (46) thereof.

12. Seat arrangement according to one or more of the preceding claims, in which a buffer arrangement (76, 77) is provided between the backrest (17) of the seat carrier (15) and the portion (13) of the seat supporting structure (11) lying opposite it, which buffer arrangement is effective in particular with severe resilient depression.

13. Seat arrangement according to one or more of the preceding claims, in which the distance between the articulation points (21, 51) of the first and second resiliently compressible parts (23, 24, 50) on the bottom part (12) is less than the distance between the articulation points (36, 52) of these resiliently compressible parts on the seat part (16) of the seat carrier (15).

14. Seat arrangement according to claim 13, in which the ratio of these distances (51-21 to 36-52) lies in the range 0,6 to 0,45.

15. Seat arrangement according to one or more of the preceding claims, in which an articulation point (47) of a link (45) on the seat supporting structure (11) is distanced from the articulation point (21) of a first resiliently compressible part (23, 24) on the bottom part (16) of the seat supporting structure (11) in the horizontal direction by an amount which is roughly of the order of magnitude of the distance between the seat part (16) of the seat carrier (15) and the bottom part (12) of the seat supporting structure (11) when the seat is not loaded.

16. Seat arrangement according to one or more of the preceding claims, in which an articulation point (47) of a link (45) on the seat supporting structure (11) is distanced from the articulation point (21) of a first resiliently compressible part (23, 24) on the bottom part (16) of the seat supporting structure (11) in the vertical direction by an amount which is roughly of the order of magnitude of the distance between the seat part (16) of the seat carrier (15) and the bottom part (12) of the seat supporting structure (11) when the seat is not loaded.

17. Seat arrangement according to one or more of the preceding claims, in which the length of the link (45) between its articulation points (46, 47) is of the order of magnitude of about half the distance between the seat part (16) of the seat carrier (15) and the bottom part (12) of the seat supporting structure (11) when the seat is not loaded.

## Revendications

1. Ensemble de siège, notamment pour véhicule automobile,
comprenant un support de siège (15) disposé sur un bâti de siège (11),
et des moyens (25, 53) destinés à amortir le mouvement de ce support de siège (15) par rapport au bâti de siège (11),
et comprenant au moins un premier élément susceptible de s'affaisser élastiquement (23, 24), articulé à une partie arrière du bâti de siège (11) et à une partie avant du support de siège (15) et qui peut se raccourcir à l'encontre de la force d'un ressort (24', 27),
au moins un deuxième élément susceptible de s'affaisser élastiquement (50), articulé à une partie avant du bâti de siège (11) et à une partie arrière du support de siège (15) et qui peut se raccourcir à l'encontre de la force d'un ressort (54),
et au moins un bras articulé (45) s'étendant entre le dossier (17) du support de siège (15) et une partie dos (13) du bâti de siège (11).

2. Ensemble de siège selon la revendication 1, dans lequel le bras articulé (45), de constitution rigide, peut être placé dans une position horizontale par la mise en charge de la structure de siège (10).

3. Ensemble de siège selon la revendication 1 ou 2, dans lequel au moins l'une des parties constituées, l'une, par au moins un premier élément susceptible de s'affaisser élastiquement (23, 24) et l'autre par au moins un deuxième élément susceptible de s'affaisser élastiquement (50), présente un organe amortisseur (25, 53).

4. Ensemble de siège selon la revendication 3, dans lequel l'organe amortisseur présente la configuration d'une jambe élastique (25, 53).

5. Ensemble de siège selon une ou plusieurs des revendications précédentes, dans laquelle le point d'articulation (36, 52, 51) d'au moins un bras articulé ou d'au moins un élément susceptible de s'affaisser élastiquement (23, 24, 50) est réglable.

6. Ensemble de siège selon la revendication 5, dans lequel les points d'articulation (36, 42, 52) de l'au moins un premier élément susceptible de s'affaisser élastiquement (23, 24) et de l'au moins un deuxième élément susceptible de s'affaisser élastiquement (50) sur le support de siège (15) sont réglables l'un en sens inverse de l'autre, c'est-à-dire rapprochés ou éloignés l'un de l'autre, au moyen d'un dispositif de réglage (60, 61, 70, 71, 72).

7. Ensemble de siège selon l'une ou plusieurs des revendications précédentes, dans lequel il est prévu deux premiers éléments susceptibles de s'affaisser élastiquement (23, 24), entre lesquels le deuxième élément susceptible de s'affaisser élastiquement (50) est disposé (figure 3).

8. Ensemble de siège selon une ou plusieurs des revendications précédentes, dans lequel l'au moins un premier élément susceptible de s'affaisser élastiquement (23, 24) possède une plus grande constante élastique que l'au moins un deuxième élément susceptible de s'affaisser élastiquement (50), de sorte que, lors de l'affaissement élastique résultant de la mise en charge, l'au moins un deuxième élément susceptible de s'affaisser élastiquement (50) se raccourcit tout d'abord sensiblement seul et que ce n'est qu'ensuite, dans la suite de l'affaissement élastique du support de siège (15), que l'au moins un premier élément susceptible de s'affaisser élastiquement (23, 24) se racourcit lui aussi.

9. Ensemble de siège selon une ou plusieurs des revendications précédentes, dans lequel dans le cas d'un fort affaissement élastique du support de siège (15), l'au moins un premier élément susceptible de s'affaisser élastiquement (23, 24) et l'au moins un deuxième élément susceptible de s' affaisser élastiquement (50) prennent une inclinaison sur l'horizontale (80) qui est de l'ordre de grandeur de quelques degrés pour chaque élément (figures 6, 7).

10. Ensemble de siège selon au moins une des revendications précédentes, dans lequel le bras articulé (45) est disposé entre le support de siège (15) et le bâti de siège (11) de manière que ses points d'articulation sur le support de siège (15) et sur le bâti de siège (11) ne se trouvent dans un plan horizontal qu'après un certain affaissement élastique du support de siège (15).

11. Ensemble de siège selon la revendication 10, dans lequel le bras articulé (45) est articulé (en 46) sur le dossier (17) du support de siège (15) et à la moitié inférieure de ce dossier.

12. Ensemble de siège selon au moins une des revendications précédentes, dans lequel il est prévu, entre le dossier (17) du support de siège (15) et la partie (13) du bâti de siège (11) qui lui fait face, un dispositif tampon (76, 77) qui entre en jeu en particulier en présence d'un fort affaissement.

13. Ensemble de siège selon une ou plusieurs des revendications précédentes, dans lequel la distance entre les points d'articulation (21, 51) des premier et deuxième éléments susceptibles de s'affaisser élastiquement (23, 24, 50) sur la partie plancher (12) est plus petite que la distance entre les points d'articulation (36, 52) de ces éléments susceptibles de s'affaisser élastiquement sur la partie assise (16) du support de siège (15).

14. Ensemble de siège selon la revendication 13, dans lequel le rapport de ces distances (51-21 à 36-52) est compris dans l'intervalle de 0,6 à 0,45.

15. Ensemble de siège selon une ou plusieurs des revendications précédentes, dans lequel un point d'articulation (47) d'un bras articulé (45) sur le bâti de siège (11) est placé à une distance horizontale du point d'articulation (21) d'un premier élément susceptible de s'affaisser élastiquement (23, 24) sur la partie plancher (12) du bâti de siège (11) qui est à peu près de l'ordre de grandeur de la distance entre la partie assise (16) du support de siège (15) et la partie plancher (12) du bâti de siège (11) lorsque le siège n'est pas chargé.

16. Ensemble de siège selon une ou plusieurs des revendications précédentes, dans lequel un point d'articulation (47) d'un bras articulé (45) sur le bâti de siège (11) se trouve à une distance verticale du point d'articulation (21) d'un premier élément susceptible de s'affaisser élastiquement (23, 24) sur la partie plancher (12) du bâti de siège (11) qui est à peu près de l'ordre de grandeur de la distance entre la partie assise (16) du support de siège (15) et la partie plancher (12) du bâti de siège (11) lorsque le siège n'est pas chargé.

17. Ensemble de siège selon une ou plusieurs des revendications précédentes, dans lequel la longueur du bras articulé (45) entre ses points d'articulation (46, 47) correspond en ordre de grandeur à peu près à la moitié de la distance entre la partie assise (16) du support de siège (15) et la partie plancher (12) du bâti de siège (11) lorsque le siège n'est pas chargé.
